(19) Europäisches Patentamt / European Patent Office / Office européen des brevets

(11) **EP 2 716 608 A1**

(12) **DEMANDE DE BREVET EUROPEEN**

(43) Date de publication:
**09.04.2014 Bulletin 2014/15**

(51) Int Cl.:
***C02F 3/28*** (2006.01)　　***C02F 3/34*** (2006.01)

(21) Numéro de dépôt: **13187543.7**

(22) Date de dépôt: **07.10.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **08.10.2012 FR 1259537**

(71) Demandeur: **Veolia Water Solutions & Technologies Support**
**94417 Saint-Maurice Cedex (FR)**

(72) Inventeurs:
• **Mansour, Alicia**
**78200 MANTES-LA-JOLIE (FR)**
• **Arnaud, Thierry**
**84250 LE THOR (FR)**

(74) Mandataire: **Larcher, Dominique**
**Cabinet Vidon**
**16B, rue de Jouanet**
**Technopôle Atalante**
**35703 Rennes Cedex 7 (FR)**

(54) **Procédé de traitement en continu d une eau contenant de la matière organique par traitement enzymatique**

(57)　L'invention concerne un procédé de traitement de l'eau en continu. Selon l'invention, un tel procédé comprend une étape de traitement biologique de l'eau (1) suivie d'une étape de filtration (3), caractérisé en ce qu'il comprend une étape de traitement enzymatique (2) prévue entre ladite étape de traitement biologique et ladite étape de filtration, ladite étape de traitement enzymatique étant réalisée par des enzymes fixées sur au moins un support tridimensionnel (30), lesdites enzymes étant aptes à dégrader au moins une partie de la matière organique contenue dans l'eau provenant de ladite étape de traitement biologique.

Fig. 1

**Description**

**1. Domaine de l'invention**

Le domaine de l'invention est celui du traitement de l'eau. Plus précisément, l'invention concerne un procédé de traitement de l'eau mettant en oeuvre une étape de traitement biologique de l'eau suivie d'une filtration. L'invention trouve son application dans le cadre du traitement des eaux usées urbaines ou industrielles en vue de leur épuration.

**2. Art antérieur**

Les procédés de traitement de l'eau mettant en oeuvre une étape de traitement biologique conduisent à la formation d'agrégats composés de microorganismes, matières organique et minérale communément désignés sous le terme de flocs. Une solution pour éliminer ces flocs est la filtration, sur membrane ou tamis, de l'eau traitée biologiquement. Toutefois, on observe souvent un colmatage relativement rapide des membranes de filtration, ou des tamis, ce qui implique d'avoir à les décolmater fréquemment. Ces opérations régulières de décolmatage nuisent à l'économie globale de ces procédés.

Le colmatage des membranes ou tamis résulte notamment de la présence de matière organique se présentant sous forme de composés organiques, hors biomasse, tels que des colloïdes, des exopolysaccharides ou des fractions organiques. Ces composés organiques solubles ne sont pas dégradés par la biomasse. Leur présence est exprimée en demande chimique en oxygène (DCO). Cette DCO limite fortement et rapidement la performance des unités de filtration ce qui a pour conséquence de limiter grandement la charge volumique (Cv) des équipements qui y sont associés. Par exemple, la charge volumique appliquée à un réacteur biologique anaérobie à membrane plus connu sous la dénomination AnMBR (Anaerobic Membrane Bioreactor) est limitée à 6-8 kg/m$^3$/jour de DCO. A titre de comparaison, la charge volumique appliquée à un réacteur connu de méthanisation pour la production de biogaz, de type lit de boues granulaire expansé ou Expanded Granular Sludge Bed (EGSB) en anglais, est de l'ordre de 20 à 24 kg/m$^3$/jour de DCO, soit environ 3 fois la capacité de traitement d'un AnMBR. Ainsi, pour traiter une eau chargée en matière organique il est nécessaire de multiplier par 3 le volume d'un AnMBR par rapport à un EGSB. Cette comparaison illustre pleinement l'importance de la limitation de construction et d'exploitation des installations de traitement de l'eau, imposée par ce problème de colmatage des membranes de filtration lorsque la charge volumique augmente.

En pratique, le flux membranaire des membranes utilisées pour le traitement d'eaux chargées en matière organique est bien évidemment plus faible que le flux membranaire des mêmes membranes pour le traitement des eaux claires. Ainsi, ce flux est 3 à 4 fois plus faible pour le traitement des boues provenant d'un procédé aérobie et 5 à 10 fois plus faible pour les traitements des boues provenant d'un procédé anaérobie. Les surfaces membranaires doivent donc être d'autant plus importantes pour un débit identique.

En outre, la concentration maximale en biomasse dans les réacteurs biologiques est limitée et ne permet pas d'obtenir une performance optimale, en raison de l'importante charge massique appliquée (kg de DCO/ kg de biomasse en suspension/ jour).

Enfin, le dépôt de matière organique à la surface des membranes favorise le développement d'un biofilm à la surface des membranes de filtration, accélérant leur usure et leur colmatage.

Afin de résoudre ces problèmes, il existe des procédés de nettoyage en place, ou « cleaning in place » (CIP) en anglais, des membranes ou tamis dédiés à la rétention de la matière organique contenue dans les eaux. Ce type de nettoyage consiste à faire circuler au niveau des membranes ou du tamis une solution composée d'additifs chimiques et/ou d'enzymes permettant de dégrader les biofilms et substances hors biomasse pouvant colmater les membranes. Toutefois, ce procédé ne peut être appliqué en continu et nécessite donc l'arrêt complet de toute la ligne de filtration de l'eau. De plus, les solutions enzymatiques utilisées pour le nettoyage sont extrêmement onéreuses et ne permettent qu'un décolmatage grossier et temporaire des membranes. Enfin, les techniques de nettoyage en place par circulation d'une solution enzymatique ne permettent pas de récupérer les enzymes une fois celles-ci utilisées. Les enzymes sont donc perdues après une seule utilisation ce qui constitue un gaspillage très coûteux.

Il a également été constaté que l'augmentation de la fréquence de tels nettoyages en place ne permettait pas d'améliorer significativement les résultats et ne faisaient qu'augmenter inutilement les coûts d'exploitation.

Il a également été proposé dans l'art antérieur de fixer des enzymes directement sur les membranes. Toutefois, il a été observé que ce mode de fixation peut altérer les performances originelles des membranes. De plus, les membranes sur lesquelles sont fixées les enzymes doivent être changées dès que l'activité enzymatique diminue, et ce, afin de garder une efficacité de traitement optimale. Or, ces membranes sont encore capables de filtrer l'eau qui leur parvient. Compte tenu du coût de ces membranes, ces fréquents changements induisent un gaspillage inutile et une augmentation des coûts très importante.

On notera enfin qu'il a déjà été proposé dans l'état de la technique un procédé de traitement biologique permettant de diminuer la concentration en composés organiques solubles en amont de membranes de filtration. Cette technique, décrite dans la demande WO 2011/026521, ne met pas en oeuvre d'étape de traitement enzymatique. Cette technique propose l'utilisation d'un réacteur biologique prévu en amont des membranes intégrant des supports tridimensionnels de fixation et de croissance de micro-organismes aptes à dégrader, au moins en partie, les composés organiques solubles afin de limiter le colmatage des membranes. La présente invention constitue une alternative à cette technique.

## 3. Objectifs de l'invention

L'invention a notamment pour objectif de pallier les inconvénients de l'art antérieur détaillés ci-dessus.

Plus précisément, un objectif de l'invention est de fournir, dans au moins un mode de réalisation, un procédé de traitement biologique d'une eau comprenant une étape de traitement biologique et une étape ultérieure de filtration permettant d'abattre la quantité de DCO contenu dans l'eau arrivant au niveau de l'unité de filtration aux fins d'éviter ou, à tout le moins, de ralentir fortement son colmatage.

L'invention a encore pour objectif, dans au moins un mode de réalisation, de mettre en oeuvre un procédé de traitement d'eau permettant de diminuer les coûts d'exploitation de l'installation le mettant en oeuvre.

L'invention a également pour objectif, dans au moins un mode de réalisation, un procédé de traitement d'eau permettant de diminuer la taille des équipements d'une telle installation.

## 4. Exposé de l'invention

Ces objectifs, ainsi que d'autres qui apparaîtront par la suite, sont atteints à l'aide d'un procédé de traitement d'eau en continu comprenant une étape de traitement biologique suivie d'une étape de filtration. Selon l'invention, un tel procédé comprend une étape de traitement enzymatique prévue entre ladite étape de traitement biologique et ladite étape de filtration, ladite étape de traitement enzymatique étant réalisée par des enzymes fixées sur au moins un support tridimensionnel, lesdites enzymes étant aptes à dégrader au moins une partie de la matière organique contenue dans l'eau provenant de ladite étape de traitement biologique.

Ainsi, l'invention repose sur une approche tout à fait originale consistant à introduire, entre une étape de traitement biologique et une étape de filtration, une étape de traitement enzymatique dans laquelle les enzymes sont fixées sur un support. Ainsi, la matière organique contenue dans les eaux et non éliminée par l'étape de traitement biologique est dégradée par les enzymes. Cette étape de traitement enzymatique des macromolécules tels que les exopolysaccharides permet donc de limiter le colmatage des membranes en produisant des fragments plus petits. Le flux de filtration se trouvant de fait augmenté, il est possible de modifier de manière significative les paramètres de dimensionnement des installations de traitement de l'eau : la charge volumique de l'installation s'en trouve augmentée, la surface de filtration totale est diminuée, la durée de vie des membranes ou des tamis est améliorée... Cette caractéristique permet donc de diminuer la taille des équipements nécessaires au traitement biologique des eaux contenant de la matière organique, et donc de réaliser des économies d'échelles sur le génie civil et sa maintenance. Par ailleurs, cela permet également d'améliorer l'optimisation des performances de la ligne de procédé de traitement biologique des eaux.

De plus, la fixation des enzymes sur un support permet de réutiliser les enzymes jusqu'à leur épuisement, ce qui n'est pas le cas lorsqu'il s'agit de mettre en oeuvre un nettoyage en place. Cette caractéristique permet notamment d'utiliser des quantités d'enzymes moindres pour un même résultat, par rapport à l'injection de solutions enzymatiques. En outre, les enzymes fixées sont plus résistantes à la dénaturation due aux variations de pH, aux variations de température, à la présence de métaux lourds et d'acides gras... Leur durée de vie plus importante permet donc de diminuer la fréquence de maintenance des installations, de diminuer la fréquence de renouvellement des enzymes et par conséquent de réduire considérablement les coûts d'exploitation d'une installation de traitement de l'eau.

Par ailleurs, la fixation des enzymes facilitent leur renouvellement : il suffit de récupérer les supports et de les remplacer par des supports sur lesquelles des enzymes fraîches ont été immobilisées. La maintenance d'un réacteur enzymatique selon l'invention en est donc grandement facilitée.

Enfin, ce procédé permet de traiter aussi bien des eaux liquides que des eaux plus chargées en matières en suspension (MES), d'origine urbaine ou industrielle, jusqu'à des concentrations propres aux boues (40-80 g MES/L).

Selon un mode de réalisation préféré de l'invention, l'étape de traitement biologique est anaérobie. En effet, lors du traitement biologique des eaux usées, les matières en suspension et la biomasse ont tendance à s'agréger et à former des flocs. Lorsque l'étape de traitement biologique se fait en condition aérobie, les flocs sont plus gros et plus faciles à éliminer par voie mécanique. Au contraire, les flocs formés pendant une étape de traitement anaérobie sont plus petits et plus difficiles à récupérer et éliminer de manière physique. Le colmatage des membranes est donc un problème plus récurrent et plus gênant lorsque le procédé de traitement de l'eau met en oeuvre des étapes anaérobies. Le procédé selon l'invention s'applique donc préférentiellement aux procédés de traitement de l'eau mettant en oeuvre une étape de traitement biologique anaérobie car il permet de dégrader ces flocs et de résoudre le problème de colmatage des membranes durablement.

Dans une première variante de l'invention, ladite étape de traitement enzymatique suit ladite étape de traitement biologique et précède ladite étape de filtration. Selon cette variante, l'eau traitée biologiquement subit d'abord une étape de traitement enzymatique avant de parvenir à l'unité de filtration. Ainsi, l'eau arrivant au niveau de l'unité de filtration est moins concentrée en colloïdes et en particules susceptibles de colmater les filtres. Elle est donc plus facile à filtrer et les filtres de l'unité de filtration se colmatent moins rapidement.

Dans une seconde variante de l'invention, ladite étape de traitement enzymatique suit ladite étape de filtration et précède ladite étape de traitement biologique. Dans ce cas, l'étape de traitement enzymatique est mise en oeuvre sur une boucle de recirculation d'au moins une partie de l'eau filtrée par l'unité de filtration vers l'étape de traitement biologique. La mise en oeuvre du traitement enzymatique à ce niveau du procédé permet de faire parvenir une eau débarrassée de ses composants organiques susceptibles de colmater l'unité de filtration au niveau de l'étape de traitement biologique. Par conséquent, l'eau à filtrer a été traitée de manière biologique et enzymatique : elle est donc plus facile à filtrer.

Il est possible dans les deux variantes de recirculer au moins une partie de l'eau filtrée vers l'étape de traitement biologique ce qui permet de diluer les boues contenues dans le réacteur biologique. Plus précisément, la quantité d'eau à faire recirculer de l'unité de filtration vers le réacteur biologique dépend de la mesure de la pression ou du débit de l'eau, au niveau de l'unité de filtration. En effet, une forte pression au niveau des membranes ou du tamis est le signe que l'eau arrivant à l'unité de filtration est fortement chargée en particules pouvant colmater les membranes, ou que le processus de colmatage est entamé. Par conséquent, il sera utile de mettre en oeuvre l'étape de traitement enzymatique afin de diminuer cette concentration en composés organiques solubles et faciliter la filtration.

Avantageusement, ladite étape de filtration met en oeuvre des moyens de filtration ayant un pouvoir de coupure de 0,01 $\mu$m à 1 mm et sont choisis parmi les membranes, tambours, disques filtrants ou filtres granulaires.

Avantageusement, l'au moins un support tridimensionnel est choisi parmi les billes d'argile, les billes de polystyrène expansées, les mousses de polyuréthane, les membranes de polyuréthane, les éléments en matériaux plastiques comme le polyuréthane, le polyéthylène ou le polypropylène, les fibres d'alumine, les fibres de verre, le tissu de Nylon ®, le polyester non tissé, les tubes de polystyrène, les billes creuses de polystyrène, les anneaux de Raschig. Le choix du support de fixation des enzymes dépend des caractéristiques des enzymes à fixer et de l'eau à traiter, et peut être déterminé grâce aux connaissances générales de l'homme du métier. Toutefois, ces supports présentent l'avantage d'être chimiquement inerte, ce qui évite les interférences avec les enzymes. Ces supports sont également légers, facile à produire et peu onéreux. De plus, ils offrent une surface de fixation importante pour les enzymes ce qui améliorent grandement l'efficacité de l'étape de traitement enzymatique telle que prévue par l'invention.

De manière particulièrement avantageuse, le pourcentage de vide dans le support de fixation des enzymes devra être supérieur ou égal à 98%. Le pourcentage de vide se calcule comme suit :

$$\text{Pourcentage de vide (\%)} = 1 - (\text{volume de matériau constituant le support} / \text{volume global du support})$$

De manière encore plus préférée, la surface de contact du support avec les enzymes sera comprise de 150 à 1500 m²/m³, de préférence environ de 200 à 500 m²/m³. La surface de contact se calcule comme suit :

$$\text{Surface de contact (m}^2\text{/m}^3) = \text{surface maximale de support susceptible d'être recouverte par les enzymes} / \text{volume global du support.}$$

Préférentiellement, lesdites enzymes sont fixées sur l'au moins un support soit directement, soit par immobilisation via un polymère.

Les enzymes peuvent être fixées directement sur le support lors de la fabrication industrielle du support. Cette fixation directe peut se faire par adsorption des enzymes par le matériau du support, par exemple à la surface de billes de polystyrène expansé, de fibres d'alumine, de mousses ou des éléments en matériau plastiques comme le polyéthylène, polypropylène. Cette étape d'adsorption peut également être suivie d'une étape de polymérisation ou d'une étape de réticulation. Enfin, l'immobilisation directe peut se faire par liaison covalente des enzymes avec leur support de fixation, comme cela peut être le cas avec des fibres de verre, des mousses ou des éléments en plastique comme le polyuréthane, polyéthylène et polypropylène , ou du tissu de Nylon ®.

Les enzymes peuvent également être fixées sur les supports de manière indirecte, via un polymère ou une résine de polymère qui est ensuite appliquée sur le support. Les supports pouvant être utilisés pour un mode de fixation indirecte comprennent notamment les fibres d'alumine ou de verre, le polyester non tissé, le tissu de Nylon, les billes creuses ou les tubes de polystyrène. Les polymères pouvant être mis en oeuvre dans le cadre d'une immobilisation indirecte des enzymes sur le support peuvent notamment être choisis parmi le polyéthylène-imine, la polyazetidine, la polyphénylalanine-lysine, le polyéther oléfinique et le polysulfone.

Les enzymes pourront être fixées sur les supports selon différentes techniques connues de l'art antérieur. Ce mode de fixation des enzymes dépend à la fois de la nature de l'enzyme et de celle du support (C.Z.Guidini et al, Biochemical Engineering Journal, 52 (2010), 137-143).

Dans un mode de réalisation avantageux, le temps de contact de l'eau avec lesdites enzymes lors de ladite étape de traitement enzymatique est compris entre 1 et 30 minutes, de préférence est égal à 10 minutes environ. Le temps de contact dépend de la concentration en enzyme et de la concentration en composés organiques à dégrader présents dans l'eau ainsi que les conditions physico-chimiques du milieu (pH et température). Un temps de contact court suffit aux enzymes pour dégrader les molécules de matière organique contenue dans l'eau après traitement biologique. Il permet également de ne pas ralentir le procédé ce qui accroitrait les coûts de traitement des eaux.

Dans un mode de réalisation préféré, le procédé selon l'invention comprend en outre une étape de recirculation d'au moins une partie de l'eau provenant de ladite étape de filtration vers ladite étape de traitement biologique. Cette étape de recirculation permet d'améliorer la qualité de l'eau traitée.

De préférence, lesdites enzymes sont choisies parmi les lipases, les protéases, les amylases, les glycogénases, les cellulases, les glucosidases et leur combinaison. Les enzymes sont choisies en fonction de la nature de l'eau à traiter et leur choix peut être déterminé grâce aux connaissances générales de l'homme du métier. On peut citer à titre d'exemples de telles enzymes la lipase, la trypsine, la chymotrypsine, la pepsine A, l'AC lyase, la hyalurontiase, l'alpham-annostiase, l'alpha-D-glucostiase, la beta-D-glucostiase, l'alpha-D-glalactostiase, la staltiase, le lysozyme, la pectinase, la chithase, la D-extranase, l'amyloglucostiase, la beta-amylase, l'alpha-amylase et la glycogénase.

Avantageusement, le procédé selon l'invention comprend en outre une étape de nettoyage en place desdits moyens de filtration. En ce cas, la composition de la solution de nettoyage se limitera préférentiellement à des additifs chimiques, pour la stérilisation des équipements par exemple. Un tel nettoyage en place pourra être mis en place beaucoup moins fréquemment que dans les installations ne mettant pas en oeuvre de traitement enzymatique selon la présente invention.

Un autre aspect de l'invention concerne une installation de traitement de l'eau contenant de la matière organique pour la mise en oeuvre du procédé selon l'invention comprenant :

    a. des moyens d'amenée de l'eau contenant de la matière organique à traiter,
    b. un réacteur de traitement biologique de l'eau,
    d. au moins une unité de filtration incluant des moyens de filtration,
    e. des moyens d'évacuation de l'eau filtrée,

caractérisée en ce que ladite installation comprend en outre un réacteur de traitement enzymatique renfermant au moins un support tridimensionnel sur lequel sont fixées des enzymes.

L'interposition du réacteur enzymatique entre le réacteur biologique et l'unité de filtration permet aux membranes de filtration et tamis de n'être mises en contact qu'avec de l'eau traitée biologiquement et ne contenant que des petits fragments de composés organiques solubles. Cette caractéristique permet de ne pas saturer les membranes avec un flux trop compact à filtrer.

De préférence, la géométrie du réacteur enzymatique respecte un rapport hauteur / diamètre environ égal à 2 pour assurer un flux ascendant suffisant pour limiter le colmatage à un coût énergétique moindre.

Avantageusement, ledit réacteur de traitement enzymatique est pourvu de moyens permettant de l'isoler hydrauliquement. Ces moyens d'isolation hydraulique peuvent comprendre des canalisations d'amenée de l'eau traitée biologiquement entre le réacteur biologique et le réacteur enzymatique ainsi que des canalisations d'évacuation de l'eau traitée par les enzymes entre le réacteur enzymatique et l'unité de filtration. Ces deux types de canalisations peuvent être commandés par des vannes, afin de permettre ou bloquer la circulation de l'eau dans le réacteur enzymatique. L'isolation hydraulique correspond donc à l'état du réacteur lorsque les vannes des canalisations d'amenée et/ou d'évacuation sont fermées. En ce cas, l'installation selon l'invention comprend en outre des moyens directs de communication fluidique du réacteur de traitement biologique à l'au moins une unité de filtration, ces moyens directs de communication fluidique ne fonctionnant pas en même temps que le réacteur enzymatique. Ainsi, il est possible de fermer la circulation de l'eau entre le réacteur de traitement biologique et le réacteur de traitement enzymatique pour dévier l'eau traitée biologiquement vers les moyens directs. L'eau circulera donc entre le réacteur de traitement biologique et l'unité de filtration, comme c'est le cas dans les installations de l'art antérieur. Cette caractéristique permet d'intervenir sur le réacteur enzymatique en cas de défaillance ou de maintenance, sans nécessiter l'arrêt complet du procédé de traitement de l'eau.

De plus, cette caractéristique permet également d'adapter et recycler les installations actuelles car il suffit d'installer le réacteur et de le mettre en communication avec le réacteur biologique et l'unité de filtration existant pour pouvoir mettre en oeuvre le procédé selon l'invention. Cet aspect de l'invention permet donc de limiter les frais liés à la transformation de l'installation et d'améliorer les performances des installations actuelles à moindre coût.

De manière avantageuse, ledit réacteur de traitement biologique inclut un moyen de mélange mécanique, hydraulique ou gazeux. De tels moyens de mélange favorise la dégradation de la matière contenue dans l'eau à traiter par la biomasse.

Dans un mode de réalisation préféré de l'invention, ledit réacteur de traitement biologique est choisi parmi le groupe comprenant un réacteur anaérobie complètement mélangé (Completely Stirred Tank Reactor (CSTR) en anglais), un réacteur à lit fluidisé, un réacteur à lit granulaire (par exemple comme le lit de boues granulaire ascendant) et les réacteurs hybrides.

On peut citer à titre d'exemple de réacteur à lit granulaire le réacteur à lit de boues granulaire ascendant (Upflow Anaerobic Sludge Blanket (UASB) en anglais) ou l'EGSB. On comprend par « réacteur hybride » un réacteur combinant plusieurs technologies comme un réacteur hybride combinant un biofiltre et la technologie UASB.

Avantageusement, lesdits moyens de filtration sont choisis parmi une membrane de microfiltration, de nanofiltration, d'ultrafiltration et d'osmose inverse.

De préférence, l'installation selon l'invention comprend en outre un réservoir de nettoyage en place et des moyens de connexion dudit réservoir à l'au moins une unité de filtration et au réacteur de traitement biologique. La technique du nettoyage en place peut être utilisée à titre de complément du procédé selon l'invention pour nettoyer de manière approfondie l'ensemble des équipements constituant les installations. En ce cas, la solution de nettoyage comprendra à titre principal des additifs chimiques, le traitement enzymatique des polluants étant effectuée en continu grâce au procédé selon l'invention.

Dans un mode de réalisation avantageux, l'installation selon l'invention comprend en outre une boucle de recirculation de l'eau traitée et filtrée vers le réacteur de traitement biologique et/ou une boucle de recirculation de l'eau traitée par le réacteur enzymatique vers le réacteur biologique. Cette caractéristique permet notamment de diluer une eau qui serait trop chargée en matière organique, hors biomasse, afin de faciliter son traitement et d'améliorer la qualité de l'eau traitée et filtrée.

Dans une première variante de l'invention, ledit réacteur enzymatique est situé en aval dudit réacteur biologique et en amont de ladite unité de filtration. Dans ce mode de réalisation, l'eau traitée biologiquement est ensuite débarrassée des composés organiques non dégradables par la biomasse grâce à une étape de traitement enzymatique mise en oeuvre dans le réacteur de traitement enzymatique. Les composants contenus dans l'eau, susceptible de colmater les filtres de l'unité de filtration, sont ainsi suffisamment dégradés. L'eau est filtrée plus facilement, les filtres se colmatent moins rapidement, la fréquence de maintenance et de remplacement des filtres est réduite.

Dans une seconde variante de l'invention, ledit réacteur enzymatique est situé en aval de ladite unité de filtration et en amont dudit réacteur biologique. Cette variante est particulièrement intéressante lorsqu'une boucle de recirculation est mise en oeuvre entre l'unité de filtration et le réacteur de traitement biologique.

## 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un synoptique d'un premier mode de réalisation d'une installation pour la mise en oeuvre d'un procédé selon l'invention ;
- la figure 2 est un graphique des résultats obtenus grâce à la mise en oeuvre du procédé selon l'invention avec une installation selon la figure 1;
- la figure 3 représente un exemple de support tridimensionnel pouvant accueillir des enzymes dans le cadre d'un mode de réalisation de la présente invention ; et
- la figure 4 présente un synoptique d'un second mode de réalisation d'une installation pour la mise en oeuvre du procédé selon l'invention.

## 6. Description d'un mode de réalisation de l'invention

Le principe général de l'invention repose sur la dégradation enzymatique de composés organiques non dégradables par un traitement biologique, contenus dans l'eau à traiter, responsables du colmatage des unités de filtration utilisées dans les procédés de traitement de l'eau. Une première variante illustrant ce principe consiste en l'interposition d'une étape de traitement enzymatique sur supports entre une étape de traitement biologique et une étape de filtration membranaire. Dans une autre variante illustrant également ce principe, l'étape de dégradation enzymatique se fait sur les concentrats produits lors de l'étape de filtration avant d'être redirigés vers le réacteur biologique pour subir une nouvelle étape de traitement biologique. Ainsi, l'eau traitée biologiquement est déjà débarrassée d'une grande partie de ses composés organiques avant d'être traitée biologiquement et de parvenir à l'unité de filtration.

En effet, soumettre l'eau traitée biologiquement à une étape de traitement enzymatique sur supports permet de dégrader ces composés en fragments de taille inférieure et donc d'éviter, ou à tout le moins de limiter, le colmatage des membranes. La fixation des enzymes sur support permet, de plus, leur utilisation prolongée dans le temps, limitant les fréquences de maintenance et les coûts d'exploitation de l'installation.

**6.1. Exemple d'un premier mode de réalisation d'une installation pour la mise en oeuvre du procédé selon l'invention.**

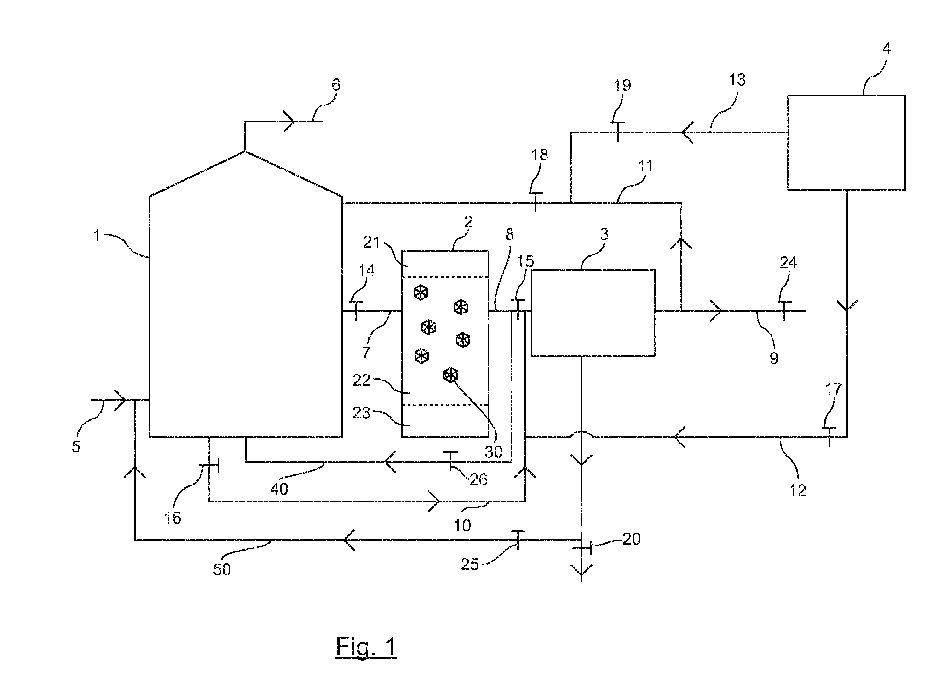

On présente en relation avec la figure 1 le synoptique d'un exemple d'une installation pour le traitement d'un effluent contenant de la matière organique grâce au procédé selon l'invention.

L'eau à traiter est amenée par la canalisation d'amenée de l'eau 5 pour être soumise à une étape de traitement biologique dans un réacteur anaérobie 1. Ce réacteur 1 contient de la biomasse permettant de dégrader une partie de la pollution contenue dans l'eau. Le biogaz est évacué en haut du réacteur 1 par une canalisation d'évacuation du biogaz 6. Ce réacteur 1 est du type CSTR anaérobie avec mélangeur.

L'eau traitée biologiquement est acheminée du réacteur biologique 1 vers le réacteur enzymatique 2 par une canalisation 7. Le réacteur enzymatique 2 présente une forme générale cylindrique avec un rapport hauteur/ diamètre approximativement égal à 2.

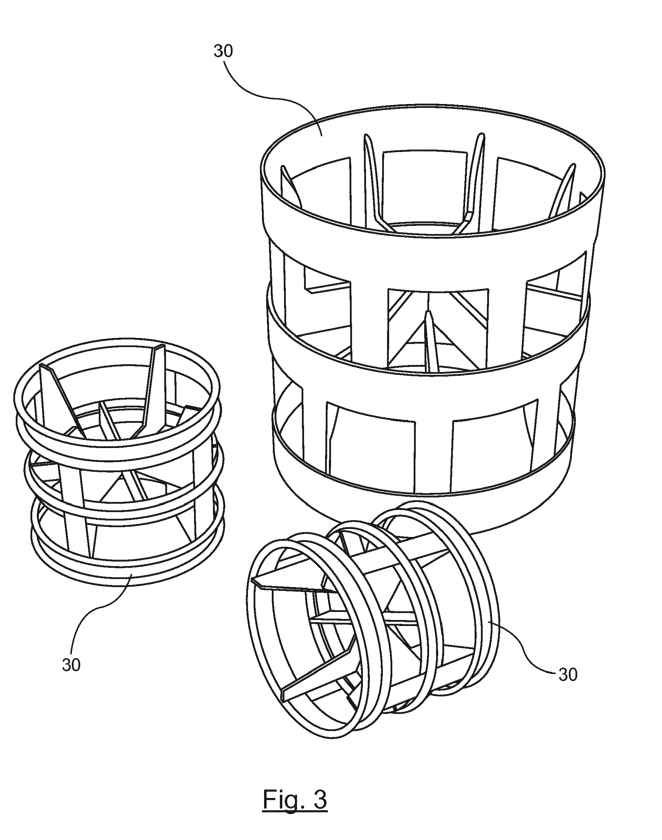

Le réacteur enzymatique 2, présentant un flux ascendant ou descendant, dispose d'un plancher 23 et d'un plafond 21 perforés. Il est empli dans sa partie médiane 22 de supports tridimensionnels 30 élaborés dans un matériau chimiquement inerte sur lesquels sont immobilisées des enzymes. Un exemple de supports tridimensionnels 30 en polyéthylène ou polypropylène est représenté à la figure 3 en différentes tailles. De tels supports 30 comprennent un pourcentage de vide d'au moins 98% et une surface de contact avec les enzymes d'environ 200 $m^2/m^3$. On peut citer à titre d'exemple la fixation de lipase, de glucosidases et de protéases fixées par adsorption sur des billes de polystyrène expansées. L'eau traitée biologiquement reste en contact avec les enzymes fixées sur les supports 30 pendant une durée approximative de 10 minutes. Au cours de cette durée, les enzymes agiront sur les flocs de matière organique pour décomposer les macromolécules organiques en fragments de taille inférieure. Par exemple, les molécules d'amidon sont digérées par les amylases en décamères de glucose. La taille des fragments souhaitée est déterminée en fonction de la porosité des membranes mises en oeuvre, et peut être obtenue en augmentant le temps de contact avec l'eau et les enzymes, en augmentant la concentration d'enzymes dans le réacteur enzymatique 2 ou en diversifiant les enzymes pour multiplier les possibilités de dégradation.

L'eau traitée dans le réacteur enzymatique est ensuite évacuée par une canalisation 8 vers l'unité de filtration membranaire 3. La filtration membranaire de l'eau se fait également en milieu anaérobie, sur des membranes, par exemple, de type X-FLOW F-4385 de marque NORIT ®. L'eau ainsi filtrée est évacuée par une canalisation 9 d'évacuation de l'eau filtrée.

Une boucle de recirculation 11 permet d'envoyer une partie de l'eau filtrée vers le réacteur biologique 1. Cette caractéristique permet notamment de diluer des eaux à traiter qui seraient exceptionnellement chargées en matière organique.

Une canalisation 40 permet de faire circuler la matière organique dégradée par les enzymes dans le réacteur 2 vers le réacteur biologique 1. Le concentrat provenant de l'unité de filtration 3 est recirculé par l'intermédiaire de la canalisation 50 vers la canalisation d'amenée de l'eau à traiter 5 afin que la concentration dans le réacteur soit constante par ouverture ponctuelle de la vanne 25. L'excès de concentrat est évacué par ouverture de la vanne 20. Cette configuration est retenue si on se rend compte que les polymères sectionnés lors du passage dans le réacteur 2 passent à travers les membranes du réacteur 3. Dans ce cas, il est préférable de faire recirculer les colloïdes de faible taille pour qu'ils soient digérés par la biomasse du réacteur biologique 1 et ne passent pas à travers l'unité de filtration 3.

Une canalisation 10 permet de faire circuler le digestat composé de flocs et de liquide directement du réacteur biologique 1 vers l'unité de filtration 3 en cas d'intervention de maintenance sur le réacteur enzymatique 2.

Il est également à noter que les canalisations 7, 8, 9, 10, 11, 40 et 50 sont respectivement pourvues de vannes 14, 15, 24, 16, 18, 26, 25, commandables à distance, permettant de commander le sens de la circulation de l'eau entre les différents équipements 1, 2 et 3.

Dans ce mode de réalisation, un réacteur de nettoyage en place 4 est également prévu pour nettoyer régulièrement l'ensemble des équipements. Ce réacteur 4 est respectivement relié aux canalisations 10 et 11 par des canalisations 12 et 13, dont le fonctionnement est respectivement commandé par les vannes 17 et 19. Les canalisations 12 et 13 permettent de faire circuler dans l'ensemble de l'installation une solution de nettoyage contenant des produits chimiques ($H_2O_2$, NaOH, acide nitrique, acide phosphorique...). Dans la mesure où la dégradation enzymatique des composés organiques contenus dans l'eau est implémentée en continu grâce au procédé selon l'invention, le nettoyage en place pourra être mis en oeuvre beaucoup plus rarement que dans les installations de l'art antérieur.

Le fonctionnement de l'installation pour la mise en oeuvre du procédé selon l'invention est explicité plus en détail grâce au tableau 1. Trois modes de fonctionnements différents y sont résumés et les vannes sont manoeuvrées (manuellement ou automatiquement) en fonction de ces trois modes :

-   le fonctionnement de l'installation lorsque le procédé selon l'invention est mis en oeuvre ou « mode normal »;
-   le fonctionnement de l'installation lorsqu'elle est nettoyée par la technique du CIP ; et
-   le fonctionnement de l'installation lorsque le réacteur enzymatique 2 est en maintenance.

**Tableau 1 - Tableau fonctionnel des ouvertures/fermetures de vannes selon les différents modes de fonctionnement du procédé selon l'invention**

| Numéro de vanne | 14 | 15 | 16 | 17 | 18 | 19 | 20 | 24 | 25 | 26 |
|---|---|---|---|---|---|---|---|---|---|---|
| Mode normal | O | O | O/F | F | O/F | F | O/F | O | O/F | O/F |
| Nettoyage avec CIP | F | F | F | O | F | O | O/F | F | F | F |
| Maintenance du réacteur 2 | F | F | O | F | O/F | F | O/F | O | O/F | F |

Légende du tableau 1:

-   « O » signifie que la vanne est ouverte,
-   « F » signifie que vanne est fermée, et
-   « O/F » signifie que la vanne est temporairement ouverte, en fonction des régulations appliquées

Plus précisément, en mode normal, le réacteur enzymatique 2 fonctionne en continu. Par conséquent, les vannes 14 et 15 sont ouvertes pour que le flux s'écoule du réacteur biologique 1 vers le réacteur enzymatique 2, puis du réacteur enzymatique 2 vers l'unité de filtration 3. Dans une première option, le réacteur 2 alimente l'unité de filtration 3 : la vanne 15 est ouverte, la vanne 26 est fermée. Dans ce cas, le traitement enzymatique permet d'augmenter le flux membranaire en retenant les colloïdes sectionnés par les enzymes. Dans une seconde option, le réacteur 2 alimente le réacteur biologique 1 par recirculation du digestat vers le réacteur biologique : la vanne 15 est fermée, les vannes 16 et 26 sont ouvertes. En ce cas, le traitement enzymatique permet de rendre les colloïdes sectionnés plus facilement digestibles par le réacteur 1 avant que les effluents ne soient envoyés vers l'unité de filtration 3. Les vannes 17 et 19 sont fermées car le CIP n'est pas utilisé. La vanne 18 peut-être fermée ou ouverte selon le taux de recirculation d'effluent éventuellement nécessaire à la dilution des digestats. Les vannes 20 et 25 sont ouvertes ou fermées selon le taux de boues anaérobies à maintenir ou à extraire du réacteur 1. La vanne 24 est ouverte pour évacuer les eaux filtrées vers la sortie. Lorsque l'installation est nettoyée par la technique du CIP, le réacteur enzymatique est en arrêt donc les vannes 14, 15, 16 et 26 sont fermées. Les vannes 17 et 19 sont ouvertes pour que la solution contenue dans le réacteur 4 puisse circuler dans l'installation selon l'invention. Les vannes 18, 20, 24 et 25 sont fermées.

Lorsque le réacteur enzymatique 2 est soumis à une maintenance, le réacteur enzymatique 2 est arrêté et isolé donc les vannes 14, 15 et 26 sont fermées. La vanne 16 est ouverte pour shunter le réacteur 2 et permettre un fonctionnement en continu du réacteur biologique 1 sans le réacteur enzymatique 2. Les vannes 17 et 19 sont fermées car le CIP n'est pas utilisé. La vanne 18 peut-être fermée ou ouverte selon le taux de recirculation d'effluent éventuellement nécessaire à la dilution des digestats. Les vannes 20 et 25 sont ouvertes ou fermées selon le taux de boues anaérobies à maintenir ou à extraire du réacteur 1. La vanne 24 est ouverte pour évacuer les eaux filtrées vers la sortie. L'isolation du réacteur enzymatique 2 sur le plan hydraulique permet d'intégrer le réacteur enzymatique dans une installation préexistante à moindre frais. Il suffit pour cela d'installer le réacteur et de le faire communiquer de manière fluidique avec le réacteur biologique 1 et l'unité de filtration 3. Plus précisément, les vannes 18, 20 et 25 permettent de réguler la charge massique, exprimée en kg DCO à traiter/ kgMVj, au sein du réacteur 1. Si on veut augmenter la concentration en boues dans le réacteur 1 et donc diminuer la charge massique, il suffit d'ouvrir la vanne 25 afin de renvoyer les concentrats issus de l'unité de filtration 3 vers le réacteur 1. En ce cas, les vannes 20 et 18 sont fermées pour ne pas extraire les boues ni diluer le digestat par l'eau filtrée. Si, au contraire, on souhaite diluer les boues et donc augmenter la charge massique, il faut fermer la vanne 25 et ouvrir les vannes 18 et 20.

Cette caractéristique permet donc de transformer et d'améliorer une installation existante simplement, rapidement et de manière économique. Ce mode de réalisation d'une installation selon l'invention convient aussi bien pour le traitement d'effluents municipaux qu'industriels. Il convient également au traitement des boues.

## 6.2. Essai comparatif 1- flux membranaire

Des essais comparatifs ont été menés afin d'évaluer le gain de performance réalisé grâce au procédé selon l'invention sur le traitement de différents types d'effluents. Quatre échantillons ont été traités soit par le procédé classique, soit par le procédé selon l'invention. L'effluent utilisé est un effluent industriel riche en lactosérum, issu de l'industrie laitière. Ce type d'effluent est moins riche en solides en suspension.

Le procédé classique comprend une étape de traitement biologique anaérobie, suivie directement d'une étape de filtration en condition anaérobie sur membranes.

Le procédé selon l'invention comprend une étape de traitement biologique anaérobie, suivie d'une étape de traitement enzymatique puis d'une étape de filtration en condition anaérobie sur membranes, comme cela est représenté à la figure 1. Les étapes de filtration et de traitement biologiques sont mises en oeuvre dans des équipements rigoureusement identiques dans les deux procédés.

L'installation selon l'invention comprend un réacteur biologique de type CSTR (réacteur continuellement mélangé) d'un volume environ égal à 2250 m$^3$. Le réacteur enzymatique est du type tour de dégazage avec un volume de 30 m$^3$ et présente une hauteur de 5,35m, un diamètre de 2,66m et une surface de 5,6 m$^2$. L'unité de filtration comprend 5 modules de type X-Flow F-4385 (Norit). Les supports utilisés pour l'étape enzymatique étaient des anneaux à ailettes de 25 mm de diamètre en polypropylène, sur lesquelles des protéases ont été fixées. Le temps de séjour hydraulique moyen dans le réacteur enzymatique était fixé à approximativement 10 minutes. La condition anaérobie a été choisie car, comme précisé précédemment, les flocs formés lors d'une étape de traitement biologique anaérobie sont plus fins et plus difficiles à éliminer que les flocs produits lors d'une étape aérobie.

Les performances de chaque procédé ont été évaluées en mesurant les vitesses de filtration dans l'unité de filtration pour chacune des conditions suivantes, en fonction de la concentration totale de solides en suspension, ou « Total Suspended Solids » en anglais (TSS), dans chacun des effluents:

- condition 1 : effluent riche en lactosérum traité avec le procédé classique en situation critique (flux maximum avant colmatage);
- condition 2 : effluent riche en lactosérum, traité avec le procédé classique.
- condition 3 : effluent riche en lactosérum, traité avec le procédé selon l'invention.

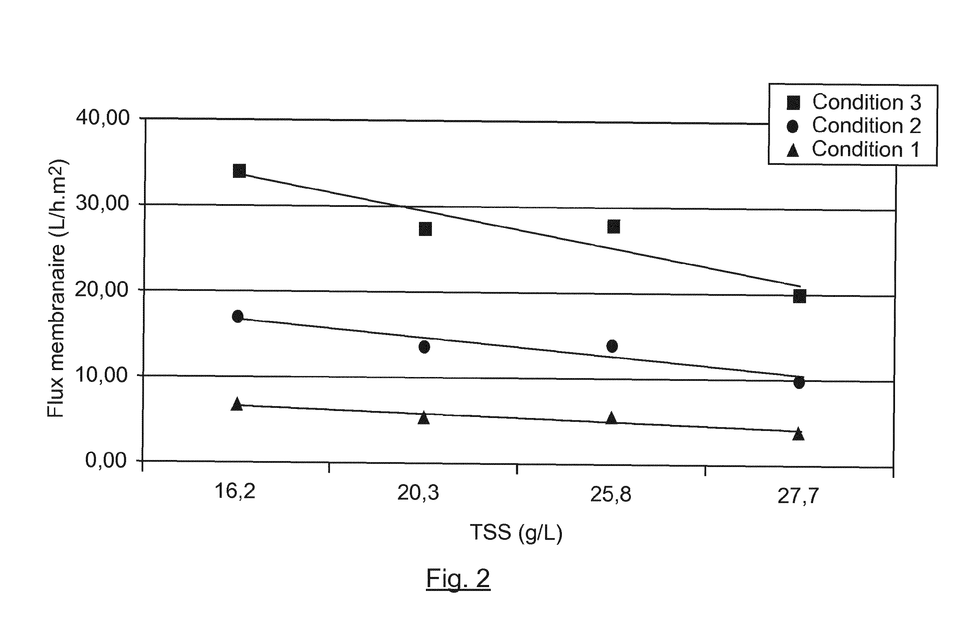

Les résultats sont présentés dans le graphique à la figure 2. Comme il est possible de le constater à la lecture de ce graphique, le procédé selon l'invention permet de doubler le flux membranaire par rapport à la condition 2, pour les mêmes caractéristiques techniques et un même effluent. Par rapport à la condition 1, la mise en oeuvre du procédé selon l'invention permet de multiplier les vitesses de filtration par un facteur d'environ 5.

En effet, les molécules de matière organiques étant dégradées en fragments plus petits, les pores des membranes s'en trouvent moins colmatés. Ainsi, la vitesse de filtration est considérablement accrue.

## 6.3. Essai comparatif 2 - dimensionnement des installations

Différents essais de dimensionnements ont été réalisés afin d'évaluer l'impact de l'introduction d'une étape enzymatique dans le procédé de traitement de l'eau sur la taille du génie civil à mettre en oeuvre.

L'effluent utilisé est celui riche en lactosérum, indiqué au point 6.2 de la demande. Les étapes du procédé classique et selon l'invention sont celles indiquées au point 6.2. Les échantillons de cet effluent ont été traités soit :

- avec le procédé classique;
- avec le procédé selon l'invention, en modifiant le nombre de modules de filtration membranaire ; ou
- avec le procédé selon l'invention, en réduisant la taille du volume de réacteur biologique.

L'objectif de cet essai est de déterminer jusqu'où les économies de génie civil peuvent aller en fixant un débit de traitement de l'eau égal à 170 m$^3$/heure.

**Tableau 2 - Résultats des essais de dimensionnements d'une installation selon l'invention, en comparaison avec une installation actuelle.**

|  | Installation actuelle | Installation selon l'invention - dimensionnement 1 | Installation selon l'invention - dimensionnement 2 |
|---|---|---|---|
| Volume réacteur biologique anaérobie | 2250 m$^3$ | 2250 m$^3$ | 1125 m$^3$ |
| Volume réacteur enzymatique | 0 m$^3$ | 30 m$^3$ | 30 m$^3$ |
| Vitesse de passage du flux dans le réacteur enzymatique | 0 | 30 m/h | 30 m/h |
| Géométrie du réacteur enzymatique | 0 | Surface : 5,6 m$^2$<br>Diamètre : 2,66 m<br>Hauteur : 5,35 m | Surface : 5,6 m$^2$<br>Diamètre : 2,66 m<br>Hauteur : 5,35 m |
| Surface membranaire | 2 × 5 modules X-Flow F-4385 (Norit) | 1 × 5 modules X-Flow F-4385 (Norit) | 2 × 5 modules X-Flow F-4385 (Norit) |

Comme indiqué dans le tableau 1, le procédé selon l'invention permet, par rapport au procédé classique, de réduire de moitié soit la surface membranaire à mettre en oeuvre, soit le volume du réacteur biologique.

**6.4 Exemple d'un second mode de réalisation d'une installation pour la mise en oeuvre du procédé selon l'invention.**

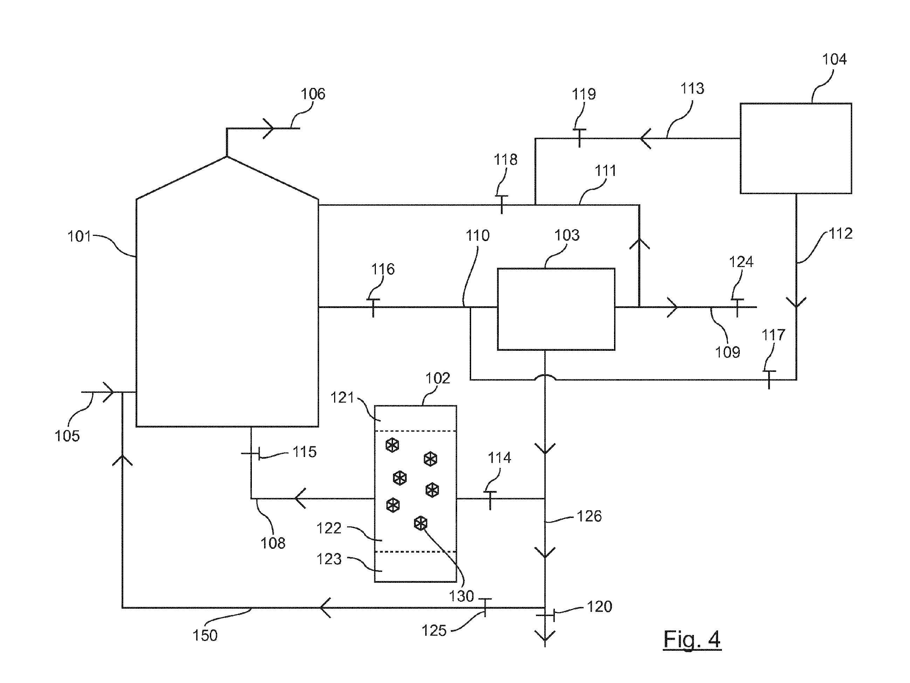

Une seconde variante du procédé selon l'invention est mise en oeuvre dans l'installation représentée à la figure 4. Les équipements constituants ce mode de réalisation de l'invention sont en tout point identiques à ceux exposés au point 6.1. Brièvement, l'eau à traiter est amenée par la canalisation d'amenée de l'eau 105 pour être soumise à une étape de traitement biologique dans un réacteur anaérobie 101 du type CSTR anaérobie avec mélangeur. Ce réacteur 101 contient de la biomasse permettant de dégrader une partie de la pollution contenue dans l'eau. Le biogaz est évacué en haut du réacteur 101 par une canalisation d'évacuation du biogaz 106.

L'eau traitée biologiquement est acheminée du réacteur biologique 101 vers l'unité de filtration 103 via une canalisation 110 dont l'ouverture et la fermeture sont commandées par la vanne 116. Une fois filtrée, est évacuée par la canalisation 109, également commandée par la vanne 124. Une partie de cette eau filtrée peut être recirculée vers le réacteur 101, via la canalisation 111 et la vanne 118, afin de diluer des eaux à traiter trop concentrées, par exemple. Le concentrat, constitué par les déchets issus de la filtration, sont acheminés via la canalisation 126 vers un réacteur de traitement enzymatique 102, identique à celui décrit dans le premier mode de réalisation : le réacteur 102 présente une forme générale cylindrique avec un rapport hauteur/ diamètre approximativement égal à 2. Il dispose également d'un flux ascendant ou descendant, d'un plancher 123 et d'un plafond 121 perforés. Il est empli dans sa partie médiane 122 de supports tridimensionnels 130 élaborés dans un matériau chimiquement inerte sur lesquels sont immobilisées des enzymes. Ces supports 130 sont identiques aux supports 30.

Le concentrat reste en contact avec les enzymes fixées sur les supports 130 pendant une durée approximative de 10 minutes pendant lesquelles les enzymes agiront sur les flocs de matière organique pour décomposer les macromolécules organiques en fragments de taille inférieure.

Le concentrat traité dans le réacteur enzymatique 102 est ensuite évacué par une canalisation 108 vers le réacteur biologique 101. L'excès de concentrat est évacué par la canalisation 126, commandée par la vanne 120. Enfin, il existe une boucle de recirculation 150 permettant de renvoyer les concentrats directement vers l'étape de traitement biologique.

Dans ce mode de réalisation, un réacteur de nettoyage en place 104 est également prévu pour nettoyer régulièrement l'ensemble des équipements. Ce réacteur 104 est respectivement relié aux canalisations 110 et 111 par des canalisations 112 et 113, dont le fonctionnement est respectivement commandé par les vannes 117 et 119. Les canalisations 112 et 113 permettent de faire circuler dans l'ensemble de l'installation une solution de nettoyage contenant des produits chimiques ($H_2O_2$, NaOH, acide nitrique, acide phosphorique...). Dans la mesure où la dégradation enzymatique des composés organiques contenus dans l'eau est implémentée en continu grâce au procédé selon l'invention, le nettoyage en place pourra être mis en oeuvre beaucoup plus rarement que dans les installations de l'art antérieur.

Le fonctionnement de l'installation pour la mise en oeuvre du procédé selon l'invention est explicité plus en détail grâce au tableau 3. Trois modes de fonctionnements différents y sont résumés et les vannes sont manoeuvrées (manuellement ou automatiquement) en fonction de ces trois modes :

- le fonctionnement de l'installation lorsque le procédé selon l'invention est mis en oeuvre ou « mode normal »;
- le fonctionnement de l'installation lorsqu'elle est nettoyée par la technique du CIP ; et
- le fonctionnement de l'installation lorsque le réacteur enzymatique 2 est en maintenance.

**Tableau 3 - Tableau fonctionnel des ouvertures/fermetures de vannes selon les différents modes de fonctionnement du procédé selon l'invention**

| Numéro de vanne | 114 | 115 | 116 | 117 | 118 | 119 | 120 | 124 | 125 |
|---|---|---|---|---|---|---|---|---|---|
| Mode normal | O | O | O | F | O/F | F | O/F | O | O/F |
| Nettoyage avec CIP | F | F | F | O | O | O | F | F | F |
| Maintenance du réacteur 2 | F | F | O | F | O/F | F | O/F | O | O/F |

Légende du tableau 3:

- « O » signifie que la vanne est ouverte,
- « F » signifie que vanne est fermée, et
- « O/F » signifie que la vanne est temporairement ouverte, en fonction des régulations appliquées, ces régulations étant identiques à celles exposées au point 6.1 de la présente description.

Ce mode de réalisation permet donc de transformer et d'améliorer une installation existante simplement, rapidement et de manière économique. Ce mode de réalisation d'une installation selon l'invention convient aussi bien pour le traitement d'effluents municipaux qu'industriels. Il convient également au traitement des boues.

Cette variante de l'invention offre toutefois l'avantage de n'appliquer le traitement enzymatique qu'au concentrat produit par la filtration de l'eau par l'unité de filtration 103. Ainsi, l'effet du réacteur 102, n'étant appliqué qu'aux seuls concentrats, est plus focalisé sur les substrats organiques peu biodégradés contrairement au premier mode de réalisation présenté au point 6.1, dans lequel l'effet du réacteur enzymatique 2 s'applique à la totalité des composants du digestat facilement ou difficilement biodégradables. Cette variante de l'invention permet donc de produire un digestat en sortie du réacteur 101 moins chargé en colloïdes, exopolysaccharides et composés organiques non digestibles par la biomasse. Ainsi, bien que le réacteur biologique 102 soit placé en aval de l'unité de filtration 103 et en amont du réacteur biologique 101, et non l'inverse, ce mode de réalisation permet également de produire une eau biologiquement traitée contenant moins de composants organiques susceptibles de colmater les membranes.

**7. Conclusion**

Au vu des résultats obtenus selon les essais comparatifs des points 6.2 et 6.3, il apparaît clairement que le procédé selon l'invention permet de réduire la taille des installations à mettre en oeuvre et de réaliser par conséquent des coûts importants sur le génie civil.

Par ailleurs, grâce à la mise en oeuvre de l'étape de traitement enzymatique, l'eau arrivant au niveau des membranes contient des fragments plus petits et est par conséquent plus facile à filtrer. Cette caractéristique permet donc d'augmenter significativement la vitesse de filtration au niveau des membranes. Or, la vitesse de filtration était jusqu'à présent un des paramètres limitant le dimensionnement et l'efficacité des procédés de traitement de l'eau. Le procédé selon l'invention permet donc d'améliorer et multiplier l'efficacité des installations de traitement de l'eau.

De plus, le phénomène de colmatage des membranes se produisant moins souvent et plus tardivement, les interventions pour nettoyage en place ou remplacement des membranes sont moins fréquentes. Le procédé selon l'invention permet donc également de réaliser des économies sur le coût des modules de filtration membranaire.

**Revendications**

1. Procédé de traitement d'eau en continu comprenant une étape de traitement biologique de l'eau suivie d'une étape de filtration, **caractérisé en ce qu'**il comprend une étape de traitement enzymatique prévue entre ladite étape de traitement biologique et ladite étape de filtration, ladite étape de traitement enzymatique étant réalisée par des enzymes fixées sur au moins un support tridimensionnel, lesdites enzymes étant aptes à dégrader au moins une partie de la matière organique contenue dans l'eau provenant de ladite étape de traitement biologique.

2. Procédé selon la revendication 1 dans lequel l'étape de traitement biologique est anaérobie.

3. Procédé selon la revendication 1 ou 2 dans lequel ladite étape de traitement enzymatique suit ladite étape de traitement biologique et précède ladite étape de filtration.

4. Procédé selon la revendication 1 ou 2 dans lequel ladite étape de traitement enzymatique suit ladite étape de filtration et précède ladite étape de traitement biologique.

5. Procédé selon l'une des revendications 1 à 4 dans lequel ladite étape de filtration met en oeuvre des moyens de filtration ayant un pouvoir de coupure de 0,01 $\mu$m à 1 mm et sont choisis parmi les membranes, tambours, disques filtrants ou filtres granulaires.

6. Procédé selon l'une des revendications 1 à 5 dans lequel l'au moins un support tridimensionnel est choisi parmi les billes d'argile, les billes de polystyrène expansées, les mousses de polyuréthane, les membranes de polyuréthane, les éléments en matériaux plastiques comme le polyuréthane, le polyéthylène ou le polypropylène, les fibres d'alumine, les fibres de verre, le tissu de Nylon, le polyester non tissé, les tubes de polystyrène, les billes creuses de polystyrènes, les anneaux de Raschig.

7. Procédé selon l'une des revendications 1 à 6 dans lequel lesdites enzymes sont fixées sur l'au moins un support soit directement, soit par immobilisation via un polymère.

8. Procédé selon l'une des revendications 1 à 7 dans lequel le temps de contact de l'eau avec lesdites enzymes lors de ladite étape de traitement enzymatique est compris entre 1 et 30 minutes, de préférence est égal à 10 minutes environ.

9. Procédé selon l'une des revendications précédentes comprenant en outre une étape de recirculation d'au moins une partie de l'eau provenant de ladite étape de filtration vers ladite étape de traitement biologique.

10. Procédé selon l'une des revendications précédentes dans lequel lesdites enzymes sont choisies parmi les lipases, les protéases, les amylases, les glycogénases, les cellulases, les glucosidases et leur combinaison.

11. Procédé selon l'une des revendications 1 à 10 comprenant en outre une étape de nettoyage en place desdits moyens de filtration.

12. Installation de traitement de l'eau contenant de la matière organique pour la mise en oeuvre du procédé selon l'une quelconque des revendications 1 à 11 comprenant :

    a. des moyens d'amenée (5, 105) de l'eau contenant de la matière organique à traiter,
    b. un réacteur de traitement biologique (1, 101) de l'eau,
    c. au moins une unité de filtration (3, 103) incluant des moyens de filtration,
    d. des moyens d'évacuation de l'eau filtrée (9, 109),
    **caractérisée en ce que** ladite installation comprend en outre un réacteur de traitement enzymatique (2, 102) renfermant au moins un support tridimensionnel (30, 130) sur lequel sont fixées des enzymes.

13. Installation selon la revendication 12 **caractérisé en ce que** ledit réacteur de traitement enzymatique (2, 102) est pourvu de moyens permettant de l'isoler hydrauliquement (10, 14, 15, 16, 107, 108, 114, 115).

14. Installation selon l'une des revendications 12 ou 13 **caractérisé en ce que** ledit réacteur de traitement biologique (1, 101) inclut un moyen de mélange mécanique, hydraulique ou gazeux.

**15.** Installation selon l'une des revendications 12 à 14 dans laquelle lesdits moyens de filtration sont choisis parmi une membrane de microfiltration, de nanofiltration, d'ultrafiltration et d'osmose inverse.

**16.** Installation selon l'une des revendications 12 à 15 comprenant en outre un réservoir de nettoyage en place (4, 104) et des moyens de connexion (12, 13, 112, 113) dudit réservoir (4, 104) à l'au moins une unité de filtration (3, 103) et au réacteur de traitement biologique (1, 101).

**17.** Installation selon l'une des revendications 12 à 16 comprenant en outre une boucle de recirculation (11, 111) de l'eau traitée et filtrée vers le réacteur de traitement biologique (1, 101) et/ou une boucle de recirculation (50) de l'eau traitée par le réacteur enzymatique (2) vers le réacteur biologique (1).

**18.** Installation selon l'une des revendications 12 à 17 dans laquelle ledit réacteur enzymatique (2) est situé en aval dudit réacteur biologique (1) et en amont de ladite unité de filtration (3).

**19.** Installation selon l'une des revendications 12 à 17 dans laquelle ledit réacteur enzymatique (102) est situé en aval de ladite unité de filtration (103) et en amont dudit réacteur biologique (101).

Fig. 1

Fig. 2

30

30

30

Fig. 3

Fig. 4

Europäisches
Patentamt

European
Patent Office

Office européen
des brevets

**RAPPORT DE RECHERCHE EUROPEENNE**

Numéro de la demande

EP 13 18 7543

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 100 36 371 A1 (BARTETZKO ANDREAS [DE]) 14 février 2002 (2002-02-14) * alinéas [0016], [0017]; figure 1 * | 1-19 | INV. C02F3/28 C02F3/34 |
| X | EP 2 213 627 A1 (MICHEL DE TRETAIGNE NICOLAS [FR]; JANOBET JEAN-CLAUDE [FR]) 4 août 2010 (2010-08-04) * alinéas [0023], [0027], [0028]; revendication 1; figure 1 * | 1-3,12 | |
| A | DE 102 49 081 A1 (LENSKI VOLKER [DE]) 29 avril 2004 (2004-04-29) * alinéa [0036] - alinéa [0042] * | 1-19 | |
| A | FR 2 390 386 A1 (EL SAYED REFAAT [SE]) 8 décembre 1978 (1978-12-08) * figure 3 * | 1-19 | |
| A | US 5 531 898 A (WICKHAM DANIEL E [US]) 2 juillet 1996 (1996-07-02) * figure 1 * | 1-19 | |
| A | WO 88/04282 A1 (WASTE ENERGY CORP [US]) 16 juin 1988 (1988-06-16) * figure 1 * | 1-19 | DOMAINES TECHNIQUES RECHERCHES (IPC) C02F |
| A | EP 0 291 665 A2 (ROEHM GMBH [DE]) 23 novembre 1988 (1988-11-23) * page 3, ligne 55 - page 4, ligne 37; figure 1 * | 1-19 | |
| A | US 5 051 184 A (TAYLOR KEITH E [CA]) 24 septembre 1991 (1991-09-24) * colonne 3, ligne 12 - ligne 14 * | 1-19 | |

Le présent rapport a été établi pour toutes les revendications

| Lieu de la recherche | Date d'achèvement de la recherche | Examinateur |
|---|---|---|
| La Haye | 31 janvier 2014 | González Arias, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**    EP 13 18 7543

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-01-2014

| Document brevet cité au rapport de recherche | | | Date de publication | Membre(s) de la famille de brevet(s) | | Date de publication |
|---|---|---|---|---|---|---|
| DE 10036371 | A1 | | 14-02-2002 | AUCUN | | |
| EP 2213627 | A1 | | 04-08-2010 | EP | 2213627 A1 | 04-08-2010 |
| | | | | FR | 2941693 A1 | 06-08-2010 |
| DE 10249081 | A1 | | 29-04-2004 | AUCUN | | |
| FR 2390386 | A1 | | 08-12-1978 | CA | 1108318 A1 | 01-09-1981 |
| | | | | DE | 2820086 A1 | 23-11-1978 |
| | | | | DK | 192078 A | 10-11-1978 |
| | | | | FR | 2390386 A1 | 08-12-1978 |
| | | | | GB | 1596344 A | 26-08-1981 |
| | | | | JP | S5416849 A | 07-02-1979 |
| | | | | NO | 781611 A | 10-11-1978 |
| | | | | SE | 408165 B | 21-05-1979 |
| | | | | US | 4237003 A | 02-12-1980 |
| US 5531898 | A | | 02-07-1996 | US | 5531898 A | 02-07-1996 |
| | | | | WO | 9631439 A1 | 10-10-1996 |
| WO 8804282 | A1 | | 16-06-1988 | AUCUN | | |
| EP 0291665 | A2 | | 23-11-1988 | DE | 3713739 A1 | 17-11-1988 |
| | | | | DK | 221688 A | 25-10-1988 |
| | | | | EP | 0291665 A2 | 23-11-1988 |
| | | | | JP | S63283800 A | 21-11-1988 |
| US 5051184 | A | | 24-09-1991 | AT | 120158 T | 15-04-1995 |
| | | | | CA | 2049215 A1 | 01-03-1992 |
| | | | | DE | 69108328 D1 | 27-04-1995 |
| | | | | DE | 69108328 T2 | 27-07-1995 |
| | | | | DK | 0473055 T3 | 24-07-1995 |
| | | | | EP | 0473055 A1 | 04-03-1992 |
| | | | | ES | 2073080 T3 | 01-08-1995 |
| | | | | US | 5051184 A | 24-09-1991 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011026521 A

**Littérature non-brevet citée dans la description**

- **C.Z.GUIDINI et al.** *Biochemical Engineering Journal,* 2010, vol. 52, 137-143